# EUROPEAN PATENT APPLICATION

(11) **EP 4 668 964 A1**
(43) Date of publication of application: **24.12.2025**
(21) Application number: 23921797.9
(22) Date of filing: 15.02.2023
(51) Int. Cl.: H04W 72/20

(54) **TRANSMISSION CONFIGURATION INDICATION STATE DETERMINATION METHOD AND APPARATUS, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2023/076300
(87) International publication number: WO 2024/168634

(57) **Abstract**

The present disclosure relates to a transmission configuration indication state determination method and apparatus, and a storage medium. The method comprises: determining N sets of unified TCI states, N being a positive integer greater than 1; and on the basis of the N sets of unified TCI states, determining a unified TCI state corresponding to an SRS resource. The transmission configuration indication state determination method provided by the present disclosure determines N sets of unified TCI states and determines, on the basis of the N sets of unified TCI states, a unified TCI state corresponding to an SRS resource, thus providing a method for determining unified TCI states corresponding to SRS resources, and improving the flexibility of unified-TCI-state-based transmission of SRS resources.

## Description

### TECHNICAL FIELD

The present disclosure relates to the field of communication technology, in particular, to a method for determining a transmission configuration indication state, a device, and a storage medium.

### BACKGROUND

In New Radio (NR) technology, for example, when a communication frequency band is located in Frequency Range 2, beam based transmission and reception are used to ensure a coverage range, due to rapid fading of high-frequency channels.

In the related art, the beam can be indicated through a transmission configuration indication (TCI) state or spatial relation information (spatialrelationinfo). When the beam is indicated based on the TCI state, signaling can be used to indicate the TCI state corresponding to each physical channel. In order to reduce signaling overhead, the unified transmission configuration indication state (unified TCI state) is introduced in 3GPP.

In order to reduce signaling overhead, the unified transmission configuration indication state (unified TCI state) is introduced in 3GPP. The unified TCI state currently includes the downlink transmission configuration indication state (DL TCI state) and the uplink transmission configuration indication state (UL TCI state) where the uplink and the downlink are separately indicated, or the joint TCI state where the uplink and the downlink are jointly indicated. If the network device indicates a DL TCI state for a downlink, then the TCI state can be used for physical downlink channels (PDCCH, PDSCH) of the terminal, and a portion of CSI-RSs (such as a sounding reference signal, SRS). If the network device indicates an UL TCI state for an uplink, then the TCI state can be used for physical uplink channels (PUCCH, PUSCH) of the terminal, and a portion of SRSs. If the network device indicates a joint TCI state, then the TCI state can be used for both uplink and downlink channels/reference signals simultaneously.

At present, only the unified TCI state for a Single-Transmission Reception Point (S-TRP) is considered. In such case, a unified TCI state corresponding to the SRS resource can be determined by configuring whether to use the unified TCI state corresponding to the S-TRP. However, how to determine the unified TCI state corresponding to the SRS resource when a unified TCI state is configured for a M-TRP is a problem that needs to be solved.

### SUMMARY

The present disclosure provides a method for determining a transmission configuration indication state, a device, and a storage medium, in order to overcome the problems in the related art.

According to a first aspect, embodiments of the present disclosure provide a method for determining a transmission configuration indication state, performed by a terminal and includes:
determining N sets of unified transmission configuration indication (TCI) states, where N is a positive integer greater than 1;
determining, based on the N sets of unified TCI states, a unified TCI state corresponding to a sounding reference signal (SRS) resource.

According to a second aspect, embodiments of the present disclosure provide a method for determining a transmission configuration indication state, performed by a network device and includes:
configuring N sets of unified transmission configuration indication (TCI) states, where N is a positive integer greater than 1, and the N sets of unified TCI states are configured to determine a unified TCI state corresponding to a sounding reference signal (SRS) resource.

According to a third aspect, embodiments of the present disclosure provide an apparatus for determining a transmission configuration indication state, including:
a processing unit configured to determine N sets of unified transmission configuration indication (TCI) states, where N is a positive integer greater than 1, and determine, based on the N sets of unified TCI states, a unified TCI state corresponding to a sounding reference signal (SRS) resource.

According to a fourth aspect, embodiments of the present disclosure provide an apparatus for determining a transmission configuration indication state, including:
a processing unit configured to configure N sets of unified transmission configuration indication (TCI) states, where N is a positive integer greater than 1, and the N sets of unified TCI states are configured to determine a unified TCI state corresponding to a sounding reference signal (SRS) resource.

According to a fifth aspect, embodiments of the present disclosure provide a device for determining a transmission configuration indication state, including:
a processor;
a memory configured to store executable instructions for the processor;
wherein the processor is configured to:
perform the method as described in any one of the first aspects.

According to a fifth aspect, embodiments of the present disclosure provide a device for determining a transmission configuration indication state, including:
a processor;
a memory configured to store executable instructions for the processor;
wherein the processor is configured to:
perform the method as described in any one of the second aspects.

According to a seventh aspect, embodiments of the present disclosure provide a storage medium having instructions stored thereon, which when executed by a processor of a terminal, the terminal is caused to perform the method described in any one of the first aspects.

According to an eighth aspect, embodiments of the present disclosure provide a storage medium having instructions stored thereon, which when executed by a processor of a network device, the network device is caused to perform the method described in any one of the second aspects.

The technical solutions provided by embodiments of the present disclosure can include following beneficial effects: N sets of unified TCI states can be determined, and the unified TCI state corresponding to the SRS resource can be determined based on the N sets of unified TCI states, so that a method for determining the unified TCI state corresponding to the SRS resource is provided, thereby improving the transmission flexibility of the SRS resource that is based on the unified TCI state.

It should be understood that the general description above and the detailed description in the following are only illustrative and explanatory, and do not limit the present disclosure.

### BRIEF DESCRIPTION OF THE DRAWINGS

The drawings, which are incorporated in and constitute a part of this specification, illustrate embodiments consistent with the present disclosure and serve together with the specification to explain principles of the present disclosure.
FIG. 1 is a schematic diagram of a wireless communication system according to one or more embodiments.
FIG. 2 is a flowchart of a method for determining a transmission configuration indication state according to one or more embodiments.
FIG. 3 is a flowchart of a method for determining N sets of unified TCI states according to one or more embodiments.
FIG. 4 is a schematic diagram of a method for determining N sets of unified TCI states based on information received at least one time according to one or more embodiments.
FIG. 5 is a schematic diagram of a method for determining N sets of unified TCI states based on information received at least one time according to one or more embodiments.
FIG. 6 is a flowchart of a method for determining a transmission configuration indication state according to one or more embodiments.
FIG. 7 is a flowchart of a method for determining N sets of unified TCI states according to one or more embodiments.
FIG. 8 is a block diagram of an apparatus for determining a transmission configuration indication state according to one or more embodiments.
FIG. 9 is a block diagram of an apparatus for determining a transmission configuration indication state according to one or more embodiments.
FIG. 10 is a block diagram of a device used for determining a transmission configuration indication state according to one or more embodiments.
FIG. 11 is a block diagram of a device used for determining a transmission configuration indication state according to one or more embodiments.

### DETAILED DESCRIPTION

A detailed explanation of exemplary embodiments, examples of which are illustrated in the drawings, will be provided herein. When the following description involves drawings, unless otherwise indicated, the same numerals in different drawings represent the same or similar elements. The examples described in the following embodiments do not represent all embodiments consistent with the present disclosure.

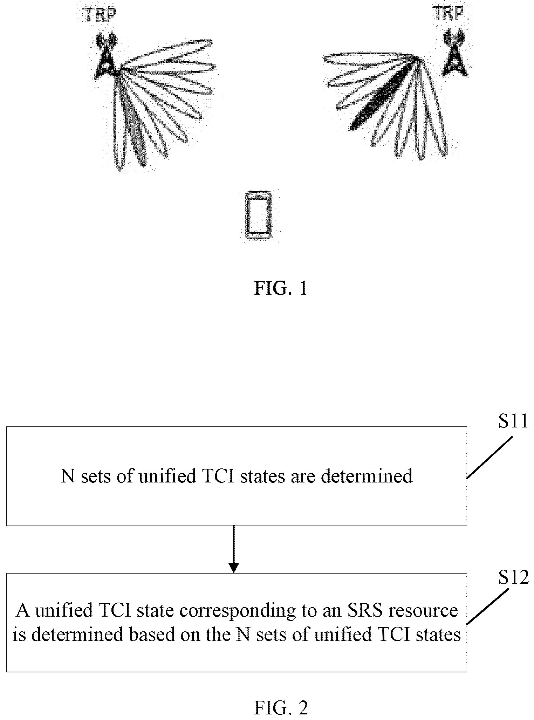

The communication method provided by embodiments of the present disclosure can be applied to a wireless communication system shown in FIG. 1. As shown in FIG. 1, the communication system includes a network device and a terminal. The terminal is connected and transmits data to the network device through wireless resources.

It can be understood that the wireless communication system shown in FIG. 1 is only for illustrative purposes. The wireless communication system can also include other network devices, for example, a core network device, a wireless relay device, a wireless backhaul device, etc., which are not shown in FIG. 1. The number of network devices and terminals included in the wireless communication system is not limited in embodiments of the present disclosure.

It can be further understood that the wireless communication system in embodiments of the present disclosure is a network that provides wireless communication functions. Wireless communication systems can adopt different communication technologies, such as code division multiple access (CDMA), wideband code division multiple access (WCDMA), time division multiple access (TDMA), frequency division multiple access (FDMA), orthogonal frequency division multiple access (OFDMA), single carrier FDMA (SC-FDMA), and carrier sense multiple access with collision avoidance. Networks can be divided according to factors such as different capacities, rates, and latencies, into 2G (generation) network, 3G network, 4G network, or a future evolved network, such as the 5th Generation (5G) Wireless Communication Network. The 5G network can also be referred to as New Radio (NR). For the convenience of description, the wireless communication network is sometimes referred to as a network in the present disclosure.

Further, the network device involved in the present disclosure can also be referred to as a wireless access network device. The wireless access network device can be a base station, an evolved node B, a home base station, an access point (AP) in wireless fidelity (WIFI) system, a wireless relay node, a wireless backhaul node, a transmission point (TP) or a transmission reception point (TRP), etc. The wireless access network device can also be gNB in NR system. Alternatively, the wireless access network device can be a component or a part of devices that constitute the base station. It should be understood that specific technologies and forms adopted by the network device are not limited in embodiments of the present disclosure. In the present disclosure, the network device can provide the communication coverage for a specific geographic region and can communicate with terminals located within the coverage region (cell). In addition, when used as a communication system in an Internet of vehicles (V2X), the network device can also be an onboard device.

Further, the terminal involved in the present disclosure can also be referred to as a terminal device, user equipment (UE), a mobile station (MS), a mobile terminal (MT), etc., which are devices that provide voice and/or data connection to users. For example, the terminal can be a handheld device, a vehicle mounted device with wireless connection functions, etc. Some examples of terminals include smart mobile phones, customer premise equipment, pocket personal computers (PPCs), handheld computers, personal digital assistants (PDAs), laptops, tablets, wearable devices, or vehicle mounted devices. In addition, a communication system in an Internet of vehicles (V2X), the terminal can also be an onboard device. It should be understood that specific technologies and forms adopted by the terminal are not limited in embodiments of the present disclosure.

In NR, especially when a communication frequency band is located in Frequency Range 2, beam based transmission and reception are required to ensure a coverage range, due to rapid fading of high-frequency channels.

In some embodiments of the present disclosure, beams for Physical Downlink Control Channel (PDCCH), Physical Downlink Shared Channel (PDSCH), Physical Uplink Control Channel (PUCCH), Physical Uplink Shared Channel (PUSCH), and/or reference signals are all independently indicated. The PDCCH and the PUCCH use Media Access Control Control Element (MAC CE) to activate a beam, while the PDSCH and the PUSCH use DCI signaling to indicate respective beams thereof. In some embodiments, the reference signals include channel state information reference signals (CSI-RS), sounding reference signals (SRS), positioning reference signals (PRS), timing reference signals (TRS), etc. The CSI-RS includes the CSI-RS used for channel state information measurement, the CSI-RS used for beam measurement, or the CSI-RS used for pathloss estimation. The SRS includes the SRS used for channel state information measurement based on codebook or non-codebook, the SRS used for beam measurement, the SRS used for antenna switching, or the SRS used for positioning measurement.

In some embodiments of the present disclosure, in order to reduce signaling overhead, the unified TCI state is required to be used. The unified TCI state may currently be used for indicating the uplink and the downlink separately, including a DL TCI state and a UL TCI state, or used for indicating the uplink and the downlink jointly, including a joint TCI state. If the base station indicates a DL TCI state used for a downlink, then the TCI state can be used for the PDSCH and the PDCCH (for example, a UE specific PDCCH) of the terminal, as well as a portion of CSI-RSs (for example, aperiodic CSI-RSs). If the base station indicates a UL TCI state used for an uplink, then the TCI state can be used for the PUSCH and the PUCCH of the terminal, as well as a portion of SRSs. If the base station indicates a joint TCI state, then the TCI state can be used for both uplink and downlink channels/reference signals.

In some embodiments, only the unified TCI state for the S-TRP is considered, which means only one set of TCI states (including the joint TCI state, or the DL TCI state and UL TCI state) is considered in the indication method, but how to indicate the TCI state in the case of the M-TRP is still a problem. For the M-TRP, a single DCI (S-DCI) based method is included. In some embodiments, PXXCH and PYYCH are used to correspond to one or more of PDCCH, PDSCH, PUCCH, and PUSCH, and if PXXCH is configured with the M-TRP and PYYCH is configured with the S-TRP, then when the TCI state indication information indicates two sets of TCI states, even the PXXCH has been configured with the M-TRP, dynamic switching between the M-TRP and the S-TRP may need to be implemented. Therefore, how to determine which set from the two sets of TCI states or both two sets of TCI states each channel corresponds to requires to be indicated using additional signaling.

At present, for the PDCCH, which set from the two sets of TCI states or both two sets of TCI states each CORESET or CORESET group should use for PDCCH reception is determined based on Radio Resource Control (RRC) signaling.

For the PUCCH, which set from the two sets of TCI states or both two sets of TCI states each PUCCH or PUCCH group should use for PUCCH transmission is also determined based on the RRC signaling.

For the PDSCH, which set from the two sets of TCI states or both two sets of TCI states each PDSCH should use for PDSCH reception is determined based on a first indication field for the PDSCH in DCI.

For the PUSCH, which set from the two sets of TCI states or both two sets of TCI states each PUSCH should use for PUSCH transmission is determined based on a second indication field for the PUSCH in DCI.

In some embodiments, when only the unified TCI state for the S-TRP is considered, whether the unified TCI state is used or not used for a sounding reference signal (SRS) can be determined based on whether the followunifiedTCIstate is configured. However, how to determine the unified TCI state corresponding to the SRS resource when the M-TRP is used for transmission is a problem that needs to be solved.

Therefore, embodiments of the present disclosure provide a method for determining a transmission configuration indication state, which determines N sets of unified TCI states, and determines the unified TCI state corresponding to the SRS resource based on the N sets of unified TCI states. The present disclosure provides a method for determining the unified TCI state corresponding to the SRS resource, thereby improving the transmission flexibility of the SRS resource that is based on the unified TCI state.

FIG. 2 is a flowchart of a method for determining a transmission configuration indication state according to one or more embodiments. As shown in FIG. 2, the method is performed by a terminal, and includes the following steps.

In step S11, N sets of unified TCI states are determined.

In the present disclosure, N is a positive integer greater than 1.

In step S12, a unified TCI state corresponding to an SRS resource is determined based on the N sets of unified TCI states.

In some embodiments of the present disclosure, the method for determining the transmission configuration indication state can be used to determine the unified TCI state corresponding to the SRS resource during the S-DCI scheduling based M-TRP transmission. It should be noted that the SRS resource in all embodiments of the present disclosure includes at least one of an aperiodic SRS resource, a periodic SRS resource, and a semi-persistent SRS resource.

In some embodiments of the present disclosure, the terminal can determine N sets of unified TCI states, where N is a positive integer greater than 1. In some embodiments, each set of unified TCI states can include a joint TCI state, or each set of unified TCI states can include at least one of a DL TCI state and a UL TCI state.

In some embodiments, the terminal can determine the unified TCI state corresponding to the SRS resource based on the determined N sets of unified TCI states. In some embodiments, the SRS resource can be a resource determined at the granularity of an SRS resource set.

According to the method provided by embodiments of the present disclosure, the N sets of unified TCI states can be determined, and the unified TCI state corresponding to the SRS resource can be determined based on the N sets of unified TCI states, so that a method for determining the unified TCI state corresponding to the SRS resource is provided, thereby improving the transmission flexibility of the SRS resource that is based on the unified TCI state.

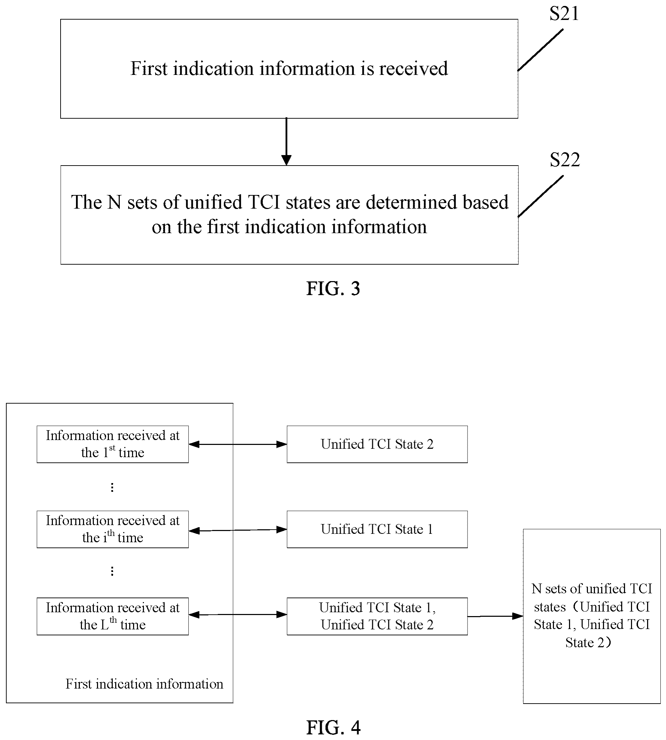

FIG. 3 is a flowchart of a method for determining N sets of unified TCI states according to one or more embodiments. As shown in FIG. 3, the method includes the following steps.

In step S21, first indication information is received.

In the present disclosure, the first indication information is configured to indicate M set(s) of unified TCI states, where M is a positive integer.

In step S22, the N sets of unified TCI states are determined based on the first indication information.

In some embodiments of the present disclosure, the terminal can receive first indication information and determine the N sets of unified TCI states based on the first indication information. In some embodiments, the first indication information is configured to indicate M set(s) of unified TCI states, where M is a positive integer.

In some embodiments of the present disclosure, the first indication information received by the terminal can include information received for L times, and information received at an i^{th} time is configured to indicate Mᵢ set(s) of unified TCI states, where L is a positive integer and i is a positive integer less than or equal to L.

In some embodiments, the first indication information received by the terminal can include the information received for L times, where the information received at the i^{th} time indicates Mᵢ set(s) of unified TCI states. For different values of i, the value of Mᵢ can be different or the same. For example, if M₁ is equal to 1, that is, the information received at the 1^{st} time corresponds to one set of unified TCI states, then M₂ can be equal to 1, 2, or other values, that is, the information received at the 2^{nd} time can correspond to one set of unified TCI states, two sets of unified TCI states, or more sets of unified TCI states, and so forth.

In some embodiments, the information received for L times can respectively come from H transmission point(s), where H is a positive integer less than or equal to L.

In some embodiments, the N sets of unified TCI states can be determined as follows. The N sets of unified TCI states are determined based on Mᵢ set(s) of unified TCI states, or determined based on Mᵢ set(s) unified TCI states and Mⱼ set(s) of unified TCI states, where j is a positive integer less than or equal to L and i is not equal to j.

In some embodiments of the present disclosure, when the N sets of unified TCI states are determined based on Mᵢ set(s) of unified TCI states, i can be equal to L. That is, the Mᵢ set(s) of unified TCI states is/are determined based on the information received at the L^{th} time, which is the latest received information, and then the N sets of unified TCI states are determined based on the Mᵢ set(s) of unified TCI states. Where the terminal receives information for L times is continued to be taken as an example, the N sets of unified TCI states can be determined based on M_{L} set(s) of unified TCI states indicated by the information received at the L^{th} time, then i=L. In some embodiments, Mᵢ can be a maximum value among M₁, M₂, ..., and M_{L}, or not the maximum value among M₁, M₂, ..., and M_{L}. Furthermore, when M_{L}=1, M_{L-1} set(s) of unified TCI states indicated by the information received at the (L-1)^{th} time is/are determined as the N sets of unified TCI states, until the value of M_{L-p} obtained is greater than 1, where p is 0 or a positive integer less than L.

In some embodiments of the present disclosure, when the N sets of unified TCI states are determined based on Mᵢ set(s) of unified TCI states and Mⱼ set(s) of unified TCI states, i can be equal to L. That is, the Mᵢ set(s) of unified TCI states is/are determined based on the information received at the L^{th} time, which is the latest received information. Furthermore, j can be less than i, and the Mⱼ set(s) of unified TCI states is/are determined based on the information received at the j^{th} time. The information received at the j^{th} time is information received before the i^{th} time, and the information received at the L^{th} time does not update at least one set of unified TCI states among the Mⱼ set(s) of unified TCI states.

Where the terminal receives information for L times is continued to be taken as an example, if the information received by the terminal at the j^{th} time indicates Mⱼ set(s) of unified TCI states, and the information received by the terminal at the L^{th} time indicates Mᵢ set(s) of unified TCI states, where the Mᵢ set(s) of unified TCI states does/do not include the update of at least one set of unified TCI states among the Mⱼ set(s) of unified TCI states, then the N sets of unified TCI states can be determined based on the Mⱼ set(s) of unified TCI states and the Mᵢ set(s) of unified TCI states. For example, if the information received by the terminal at the j^{th} time indicates two sets of unified TCI states, including a first set of unified TCI states and a second set of unified TCI states, and the information received by the terminal at the latest, i.e. the L^{th}, time indicates one set of unified TCI states, where this one set of unified TCI states updates the first set of unified TCI states indicated by the information received at the j^{th} time but does not update the second set of unified TCI states indicated by the information received at the j^{th} time, then the N sets of unified TCI states can be determined based on the updated first set of unified TCI states indicated by the information received at the L^{th} time and the second set of unified TCI states indicated by the information received at the j^{th} time, where N=2.

FIG. 4 is a schematic diagram of a method for determining N sets of unified TCI states based on information received at least one time according to one or more embodiments. As shown in FIG. 4, the information received by the terminal for L times is used as the first indication information, where the information received at the L^{th} time is the information received at the latest time among the first indication information. The information received at the L^{th} time indicates two sets of unified TCI states, namely Unified TCI State 1 and Unified TCI State 2. Then it can be directly determined that the two sets of unified TCI states indicated by the information received at the L^{th} time, namely Unified TCI State 1 and Unified TCI State 2, are the N sets of unified TCI states.

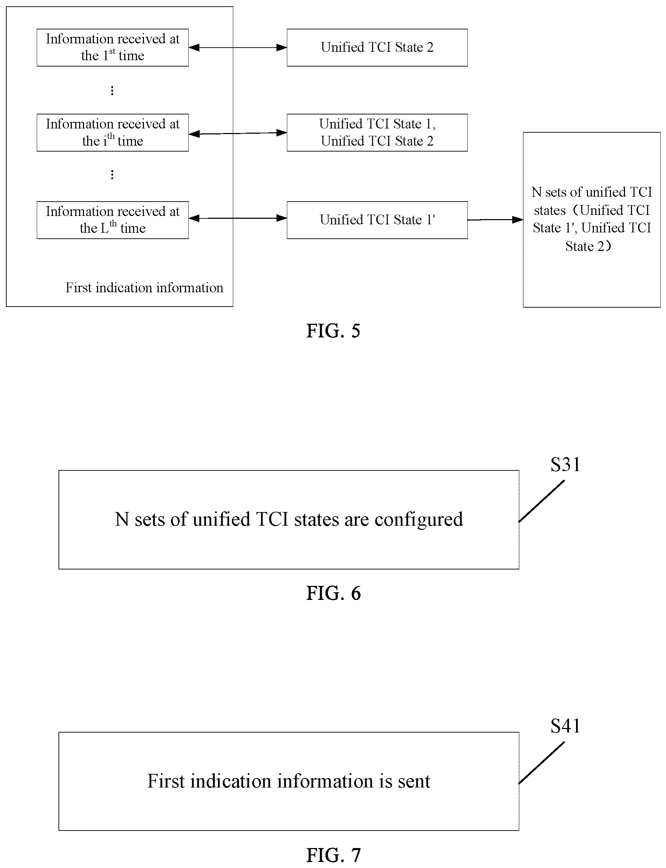

FIG. 5 is a schematic diagram of a method for determining N sets of unified TCI states based on information received at least one time according to one or more embodiments. As shown in FIG. 5, the information received by the terminal for L times is used as the first indication information, where the information received at the L^{th} time is the information received at the latest time among the first indication information. The information received at the i^{th} time is the information received before the L^{th} time. The information received at the i^{th} time indicates two sets of unified TCI states, namely Unified TCI State 1 and Unified TCI State 2. The information received at the L^{th} time indicates one set of unified TCI states, namely Unified TCI State 1', where the Unified TCI State l' is the update of the Unified TCI State 1 indicated by the information received at the i^{th} time. Then Unified TCI State l' and Unified TCI State 2 can be determined as the N sets of unified TCI states.

According to the method provided by embodiments of the present disclosure, the N sets of unified TCI states can be determined based on the first indication information including information received at least one time, so that a method for configuring the unified TCI state during the S-DCI scheduling based M-TRP transmission is provided, thereby improving the flexibility of the transmission that is based on the unified TCI state.

In some embodiments of the present disclosure, determining the N sets of unified TCI states based on the first indication information can be achieved by receiving second indication information, the second indication information being configured to activate multiple code points corresponding to a TCI state field of the first indication information, and each code point in the multiple code points being in correspondence with M set(s) of unified TCI states. In some embodiments, in response that the second indication information is received before the first indication information is received, the N sets of unified TCI states are determined based on M set(s) of unified TCI states corresponding to a default code point in the multiple code points.

In some embodiments, the first indication information can be included in DCI, and the second indication information can be included in MAC CE. The multiple code points corresponding to the TCI state field of DCI can be activated based on MAC CE. Each code point in the multiple code points corresponds to M set(s) of unified TCI states, and the N sets of unified TCI states are determined based on the M set(s) of unified TCI states. Furthermore, when MAC CE is received but DCI has not yet been received, the M set(s) of unified TCI states corresponding to the default code point in the multiple code points corresponding to the TCI state field of DCI can be activated based on MAC CE, so that the N sets of unified TCI states can be determined. In some embodiments, when MAC CE is received but DCI has not yet been received, due to the fact that the MAC CE can be used to activate the M set(s) of unified TCI states respectively corresponding to the multiple code points corresponding to the TCI state field of DCI (each code point in the multiple code points corresponds to M set(s) of unified TCI states, and the value of M corresponding to each code point can be the same or different), the N sets of unified TCI states can, in such case, be determined based on the M set(s) of unified TCI states corresponding to the default code point, for example, the code point with the minimum code point identifier in the multiple code points.

In some embodiments of the present disclosure, SRS resources include at least one of the following: SRS resources used for codebook transmission, SRS resources used for non-codebook transmission, SRS resources used for antenna switching, or SRS resources used for beam management. In some embodiments, SRS resources used for codebook transmission and SRS resources used for non-codebook transmission are SRS resources used for channel state information (CSI) measurement.

In the S-DCI scheduling based M-TRP transmission scenario, the terminal can receive the first indication information for multiple times. For some of the multiple times, the first indication information received may only indicate one set of unified TCI states. For some other times, the first indication information received may indicate multiple sets of unified TCI states. How many times to receive one set of unified TCI states and multiple sets of unified TCI states can be allocated according to actual needs, but there is at least one time, the first indication information received is configured to indicate multiple sets of unified TCI states. Then further agreement is needed on how to determine the unified TCI state corresponding to the SRS resource based on the multiple sets of unified TCI states.

In some embodiments of the present disclosure, determining the unified TCI state corresponding to the SRS resource based on the N sets of unified TCI states can include determining the unified TCI state corresponding to the SRS resource based on third indication information, the third indication information being used to configure whether the SRS resource follows a unified TCI state, that is, configuring the followunifiedTCIstate, and/or the third indication information being used to configure the SRS resource to follow one or more sets of unified TCI states from the N sets of unified TCI states.

In some embodiments, the third indication information can include a first indication field and a second indication field. The first indication field can be used to configure whether the SRS resource follows the unified TCI state (followunifiedTCIstate). The second indication field can be used to configure the SRS resource to follow one or more sets of unified TCI states from the N sets of unified TCI states.

In some embodiments of the present disclosure, the first indication field configures the followunifiedTCIstate for the SRS resource. The unified TCI state followed by the SRS resource can be N sets of unified TCI states. Furthermore, the second indication field configures the SRS resource to follow one or more sets of unified TCI states from the N sets of unified TCI states.

In some embodiments, the third indication information can be included in RRC signaling or in MAC CE. The SRS resource can be configured through the RRC signaling or the MAC CE to follow at least one set of unified TCI states from the N sets of unified TCI states, or not follow the at least one set of unified TCI states from the N sets of unified TCI states. Furthermore, when the SRS resource is configured to follow at least one set of unified TCI states from the N sets of unified TCI states, it is also possible to configure, through the RRC signaling or the MAC CE, which set or sets of unified TCI states from the N sets of unified TCI states to be followed by the SRS resource, that is, which set or sets of unified TCI states from the N sets of unified TCI states will be used for the SRS resource transmission.

In some embodiments of the present disclosure, when configuring the SRS resource to follow at least one set of unified TCI states from the N sets of unified TCI states, the unified TCI state corresponding to the SRS resource can be determined by at least one of the following: determining based on fourth indication information, including determining one set of unified TCI states indicated by the fourth indication information from the N sets of unified TCI states as the unified TCI state corresponding to the SRS resource or determining the N sets of unified TCI states indicated by the fourth indication information as the unified TCI state corresponding to the SRS resource, or determining based on a default rule, including determining one set from the N sets of unified TCI states as the unified TCI state corresponding to the SRS resource based on the default rule or determining the N sets of unified TCI states as the unified TCI state corresponding to the SRS resource based on the default rule.

In some embodiments of the present disclosure, the fourth indication information can further be used for determining one set from the N sets of unified TCI states or determining the N sets of unified TCI states as the unified TCI state corresponding to the SRS resource. In some embodiments, the fourth indication information can be included in MAC CE and/or DCI. In some embodiments, the fourth indication information can be the same as the third indication information.

In some embodiments of the present disclosure, it is also possible to determine one set from the N sets of unified TCI states or determine the N sets of unified TCI states as the unified TCI state corresponding to the SRS resource based on the default rule.

In some embodiments of the present disclosure, the SRS resource can include one or more SRS resource sets. When the SRS resource includes N SRS resource sets, that is, the number of resource sets is the same as the number of determined sets of unified TCI states, the unified TCI states corresponding to each SRS resource set in the SRS resources can be determined by determining, in response to a number of SRS resource sets being N, from the N sets of unified TCI states, unified TCI states which have a default association relationship with the SRS resource set, based on the default association relationship, as unified TCI states corresponding to SRS resources included in the SRS resource set.

For example, the terminal has determined two sets of unified TCI states, namely Unified TCI State 1 and Unified TCI State 2. Meanwhile, the SRS resources include two SRS resource sets, namely SRS Resource Set 1 and SRS Resource Set 2. The SRS Resource Set 1 has a default association relationship with the Unified TCI State 1, and the SRS Resource Set 2 has a default association relationship with the Unified TCI State 2. On this basis, the SRS Resource Set 1 in the SRS resources can be configured to be associated with the Unified TCI State 1 from the N sets of unified TCI states, and the SRS Resource Set 2 can be configured to be associated with the Unified TCI State 2. Those skilled in the art can understand that the default association relationship can be set according to actual needs. Also, for example, the SRS Resource Set 1 can have a default association relationship with the Unified TCI State 2, and the SRS Resource Set 2 can have a default association relationship with the Unified TCI State 1. In such case, the SRS Resource Set 1 can be configured to be associated with the Unified TCI State 2, and the SRS Resource Set 2 can be configured to be associated with the Unified TCI State 1, and so forth.

In some embodiments, when the SRS resource includes K SRS resource set(s), where K is a positive integer less than N, that is, the number of resource sets is less than the number of determined sets of unified TCI states, the unified TCI states corresponding to each SRS resource set in the SRS resources can be determined by determining, in response to a number of SRS resource sets being K, default K set(s) of unified TCI states from the N sets of unified TCI states, as unified TCI states corresponding to K SRS resource set(s).

For example, the terminal has determined two sets of unified TCI states, namely Unified TCI State 1 and Unified TCI State 2. Meanwhile, the SRS resources include one SRS resource set, namely SRS Resource Set 1, which has a default association relationship with the Unified TCI State 1. On this basis, the SRS Resource Set 1 can be configured to be associated with the Unified TCI State 1. In some embodiments, the SRS Resource Set 1 can also have a default association relationship with the Unified TCI State 2, and in this case, the SRS Resource Set 1 can be configured to be associated with the Unified TCI State 2, and so forth.

In some embodiments of the present disclosure, when the number of resource sets is less than the number of determined sets of unified TCI states, the unified TCI states corresponding to each SRS resource set in the SRS resources can also be determined by determining, in response to a number of SRS resource sets being K, K set(s) of unified TCI states from unified TCI states corresponding to a CORESET, as unified TCI states corresponding to K SRS resource set(s).

For example, if the SRS resource includes one SRS resource set, namely SRS Resource Set 1, then a CORESET with a minimum identifier from the CORESETs corresponding to the terminal can be determined, and the unified TCI states corresponding to the SRS Resource Set 1 can be determined based on the unified TCI states corresponding to the CORESET with the minimum identifier. When the CORESET with the minimum identifier only corresponds to one set of unified TCI states, this one set of unified TCI states can be directly determined as the unified TCI states corresponding to the SRS Resource Set 1. When the CORESET with the minimum identifier corresponds to multiple sets of unified TCI states, a first set of unified TCI states from the multiple sets of unified TCI states can be determined as the unified TCI states corresponding to the SRS Resource Set 1. The CORESET with the minimum identifier can be the CORESET with the minimum identifier from the CORESETs included in a slot during which a search space is most recently detected. The CORESET with the minimum identifier can also be the CORESET with the minimum identifier in an active Band Width Part (active BWP). The CORESET with the minimum identifier can also be the CORESET with the minimum identifier corresponding to the terminal.

In some embodiments of the present disclosure, when the number of resource sets is less than the number of determined sets of unified TCI states, the unified TCI states corresponding to each SRS resource set in the SRS resources can also be determined by determining, in response to a number of SRS resource sets being K, K set(s) of unified TCI states from unified TCI states corresponding to the Physical Downlink Shared Channel (PDSCH), as unified TCI states corresponding to K SRS resource set(s).

For example, if the SRS resource includes one SRS resource set, namely SRS Resource Set 1, then the unified TCI states corresponding to the PDSCH of the terminal can be determined, and the unified TCI states corresponding to the SRS Resource Set 1 can be determined based on the unified TCI states corresponding to the PDSCH. When the PDSCH only corresponds to one set of unified TCI states, this one set of unified TCI states can be directly determined as the unified TCI states corresponding to the SRS Resource Set 1. When the PDSCH corresponds to multiple sets of unified TCI states, a first set of unified TCI states from the multiple sets of unified TCI states can be determined as the unified TCI states corresponding to the SRS Resource Set 1. The unified TCI states corresponding to the PDSCH can be one or more sets of unified TCI states determined from the N sets of unified TCI states based on an indication field in DCI signaling. Alternatively, the unified TCI states corresponding to the PDSCH can also be one or more sets of unified TCI states determined from the N sets of unified TCI states based on a default rule. The indication field in DCI signaling is configured to indicate which one or more sets of unified TCI states from the N sets of unified TCI states are used for PDSCH transmission.

In some embodiments of the present disclosure, the first indication information can be included in the Media Access Control Control Element (MAC CE), or the first indication information can be included in the Downlink Control Information (DCI) and the Media Access Control Control Element (MAC CE).

When the first indication information is included in the Downlink Control Information (DCI) and the Media Access Control Control Element (MAC CE), the MAC CE is used to activate multiple code points in the TCI state field of DCI, which correspond to K set(s) of unified TCI states one-by-one, and the TCI state field of DCI is configured to indicate one code point in the multiple code points. In some embodiments, at least one code point in the multiple code points in the TCI state field of DCI activated by the MAC CE corresponds to multiple sets of unified TCI states. That is, there is at least one code point which corresponds to K sets of unified TCI states, where K is a positive integer greater than 1.

When the first indication information is included in the Media Access Control Control Element (MAC CE), the MAC CE is used to activate K set(s) of unified TCI states, which correspond to a first code point in the TCI state field of DCI. That is, the MAC CE only activates one code point, i.e. the first code point, in the TCI state field of DCI. Therefore, N sets of unified TCI states can be determined based on the K set(s) of unified TCI states corresponding to the first code point.

FIG. 6 is a flowchart of a method for determining a transmission configuration indication state according to one or more embodiments. As shown in FIG. 6, the method is performed by a network device, and includes the following steps.

In step S31, N sets of unified TCI states are configured.

In the present disclosure, the N sets of unified TCI states are used to determine a unified TCI state corresponding to an SRS resource, where N is a positive integer greater than 1.

In some embodiments of the present disclosure, the method for determining the transmission configuration indication state can be used to determine the unified TCI state corresponding to the SRS resource during the S-DCI scheduling based M-TRP transmission.

In some embodiments of the present disclosure, the network device can configure N sets of unified TCI states, where N is a positive integer greater than 1. In some embodiments, each set of unified TCI states can include a joint TCI state, or each set of unified TCI states can include at least one of a DL TCI state and a UL TCI state.

In some embodiments, the N sets of unified TCI states configured by the network device can be used to determine the unified TCI state corresponding to the SRS resource. In some embodiments, the SRS resource can be a resource determined at the granularity of an SRS resource set.

According to the method provided by embodiments of the present disclosure, the N sets of unified TCI states can be determined, and the unified TCI state corresponding to the SRS resource can be determined based on the N sets of unified TCI states, so that a method for determining the unified TCI state corresponding to the SRS resource is provided, thereby improving the transmission flexibility of the SRS resource that is based on the unified TCI state.

FIG. 7 is a flowchart of a method for determining N sets of unified TCI states according to one or more embodiments. As shown in FIG. 7, the method includes the following steps.

In step S41, first indication information is sent.

In the present disclosure, the first indication information is configured to indicate M set(s) of unified TCI states, where M is a positive integer.

In some embodiments of the present disclosure, the network device can send first indication information, which is configured to indicate M set(s) of unified TCI states, so that the terminal can determine the unified TCI state corresponding to the SRS resource based on the M set(s) of unified TCI states.

The first indication information sent by the network device can include information sent for L times, where information sent at an i^{th} time indicates Mᵢ set(s) of unified TCI states. For different values of i, the value of Mᵢ can be different or the same. For example, if M₁ is equal to 1, that is, the information sent at the 1^{st} time corresponds to one set of unified TCI states, then M₂ can be equal to 1, 2, or other values, that is, the information sent at the 2^{nd} time can correspond to one set of unified TCI states, two sets of unified TCI states, or more sets of unified TCI states, and so forth.

In some embodiments, the information sent for L times can respectively come from H transmission point(s), where H is a positive integer less than or equal to L.

In some embodiments, the N sets of unified TCI states included in the first indication information can be determined as follows. The N sets of unified TCI states are determined based on Mᵢ set(s) of unified TCI states, or determined based on Mᵢ set(s) unified TCI states and Mⱼ set(s) of unified TCI states, where j is a positive integer less than or equal to L and i is not equal to j.

In some embodiments of the present disclosure, when the N sets of unified TCI states are determined based on Mᵢ set(s) of unified TCI states, i can be equal to L. That is, the Mᵢ set(s) of unified TCI states is/are determined based on the information sent at the L^{th} time, which is the latest sent information, and then the N sets of unified TCI states are determined based on the Mᵢ set(s) of unified TCI states.

In some embodiments of the present disclosure, when the N sets of unified TCI states are determined based on Mᵢ set(s) of unified TCI states and Mⱼ set(s) of unified TCI states, i can be equal to L. That is, the Mᵢ set(s) of unified TCI states is/are determined based on the information sent at the L^{th} time, which is the latest sent information. Furthermore, j can be less than i, and the Mⱼ set(s) of unified TCI states is/are determined based on the information sent at the j^{th} time. The information sent at the j^{th} time is information sent before the i^{th} time, and the information sent at the L^{th} time does not update at least one set of unified TCI states among the Mⱼ set(s) of unified TCI states.

According to the method provided by embodiments of the present disclosure, the N sets of unified TCI states can be determined based on the first indication information including information sent at least one time, so that a method for configuring the unified TCI state during the S-DCI scheduling based M-TRP transmission is provided, thereby improving the flexibility of the transmission that is based on the unified TCI state.

In some embodiments of the present disclosure, determining the N sets of unified TCI states based on the first indication information can be achieved by receiving second indication information, the second indication information being configured to activate multiple code points corresponding to a TCI state field of the first indication information, and each code point in the multiple code points being in correspondence with M set(s) of unified TCI states. In some embodiments, the N sets of unified TCI states are determined based on M set(s) of unified TCI states corresponding to a default code point in the multiple code points.

In some embodiments, the first indication information can be included in DCI, and the second indication information can be included in MAC CE. The multiple code points corresponding to the TCI state field of DCI can be activated based on MAC CE. Each code point in the multiple code points corresponds to M set(s) of unified TCI states, and the N sets of unified TCI states are determined based on the M set(s) of unified TCI states. Furthermore, when MAC CE sent from the network device is received by the terminal but DCI has not yet been received, the M set(s) of unified TCI states corresponding to the default code point in the multiple code points corresponding to the TCI state field of DCI can be activated based on MAC CE, so that the N sets of unified TCI states can be determined.

In some embodiments of the present disclosure, SRS resources include at least one of the following: SRS resources used for codebook transmission, SRS resources used for non-codebook transmission, SRS resources used for antenna switching, or SRS resources used for beam management. In some embodiments, SRS resources used for codebook transmission and SRS resources used for non-codebook transmission are SRS resources used for CSI measurement.

In the S-DCI scheduling based M-TRP transmission scenario, the network device can send the first indication information for multiple times. For some of the multiple times, the first indication information sent may only indicate one set of unified TCI states. For some other times, the first indication information sent may indicate multiple sets of unified TCI states. How many times to send one set of unified TCI states and multiple sets of unified TCI states can be allocated according to actual needs, but there is at least one time, the first indication information sent is configured to indicate multiple sets of unified TCI states. Then further agreement is needed on how to determine the unified TCI state corresponding to the SRS resource based on the multiple sets of unified TCI states.

In some embodiments of the present disclosure, determining the unified TCI state corresponding to the SRS resource based on the N sets of unified TCI states can include sending third indication information, the third indication information being used to configure whether the SRS resource follows a unified TCI state, that is, configuring the followunifiedTCIstate, and/or the third indication information being used to configure the SRS resource to follow one or more sets of unified TCI states from the N sets of unified TCI states.

In some embodiments, the third indication information can be included in RRC signaling or in MAC CE. The SRS resource can be configured through the RRC signaling or the MAC CE to follow at least one set of unified TCI states from the N sets of unified TCI states, or not follow the at least one set of unified TCI states from the N sets of unified TCI states. Furthermore, when the SRS resource is configured to follow at least one set of unified TCI states from the N sets of unified TCI states, it is also possible to configure, through the RRC signaling or the MAC CE, which set or sets of unified TCI states from the N sets of unified TCI states to be followed by the SRS resource, that is, which set or sets of unified TCI states from the N sets of unified TCI states will be used for the SRS resource transmission.

In some embodiments of the present disclosure, when configuring the SRS resource to follow at least one set of unified TCI states from the N sets of unified TCI states, the unified TCI state corresponding to the SRS resource can be determined by at least one of the following: determining based on fourth indication information, including determining one set of unified TCI states indicated by the fourth indication information from the N sets of unified TCI states as the unified TCI state corresponding to the SRS resource or determining the N sets of unified TCI states indicated by the fourth indication information as the unified TCI state corresponding to the SRS resource, or determining based on a default rule, including determining one set from the N sets of unified TCI states as the unified TCI state corresponding to the SRS resource based on the default rule or determining the N sets of unified TCI states as the unified TCI state corresponding to the SRS resource based on the default rule.

In some embodiments of the present disclosure, the network device can further send fourth indication information to determine one set from the N sets of unified TCI states or determine the N sets of unified TCI states as the unified TCI state corresponding to the SRS resource, based on the fourth indication information. In some embodiments, the fourth indication information can be included in MAC CE and/or DCI. In some embodiments, the fourth indication information can be the same as the third indication information.

In some embodiments of the present disclosure, it is also possible to determine one set from the N sets of unified TCI states or determine the N sets of unified TCI states as the unified TCI state corresponding to the SRS resource based on the default rule.

In some embodiments of the present disclosure, the SRS resource can include one or more SRS resource sets. When the SRS resource includes N SRS resource sets, that is, the number of resource sets is the same as the number of determined sets of unified TCI states, the unified TCI states corresponding to each SRS resource set in the SRS resources can be determined by determining, in response to a number of SRS resource sets being N, from the N sets of unified TCI states, unified TCI states which have a default association relationship with the SRS resource set, based on the default association relationship, as unified TCI states corresponding to SRS resources included in the SRS resource set.

For example, the terminal has determined two sets of unified TCI states, namely Unified TCI State 1 and Unified TCI State 2. Meanwhile, the SRS resources include two SRS resource sets, namely SRS Resource Set 1 and SRS Resource Set 2. The SRS Resource Set 1 has a default association relationship with the Unified TCI State 1, and the SRS Resource Set 2 has a default association relationship with the Unified TCI State 2. On this basis, the SRS Resource Set 1 in the SRS resources can be configured to be associated with the Unified TCI State 1 from the N sets of unified TCI states, and the SRS Resource Set 2 can be configured to be associated with the Unified TCI State 2. Those skilled in the art can understand that the default association relationship can be set according to actual needs. Also, for example, the SRS Resource Set 1 can have a default association relationship with the Unified TCI State 2, and the SRS Resource Set 2 can have a default association relationship with the Unified TCI State 1. In such case, the SRS Resource Set 1 can be configured to be associated with the Unified TCI State 2, and the SRS Resource Set 2 can be configured to be associated with the Unified TCI State 1, and so forth.

In some embodiments, when the SRS resource includes K SRS resource set(s), where K is a positive integer less than N, that is, the number of resource sets is less than the number of determined sets of unified TCI states, the unified TCI states corresponding to each SRS resource set in the SRS resources can be determined by determining, in response to a number of SRS resource sets being K, default K set(s) of unified TCI states from the N sets of unified TCI states, as unified TCI states corresponding to K SRS resource set(s).

For example, the terminal has determined two sets of unified TCI states, namely Unified TCI State 1 and Unified TCI State 2. Meanwhile, the SRS resources include one SRS resource set, namely SRS Resource Set 1, which has a default association relationship with the Unified TCI State 1. On this basis, the SRS Resource Set 1 can be configured to be associated with the Unified TCI State 1. In some embodiments, the SRS Resource Set 1 can also have a default association relationship with the Unified TCI State 2, and in this case, the SRS Resource Set 1 can be configured to be associated with the Unified TCI State 2, and so forth.

In some embodiments of the present disclosure, when the number of resource sets is less than the number of determined sets of unified TCI states, the unified TCI states corresponding to each SRS resource set in the SRS resources can also be determined by determining, in response to a number of SRS resource sets being K, K set(s) of unified TCI states from unified TCI states corresponding to a CORESET, as unified TCI states corresponding to K SRS resource set(s).

For example, if the SRS resource includes one SRS resource set, namely SRS Resource Set 1, then a CORESET with a minimum identifier from the CORESETs corresponding to the terminal can be determined, and the unified TCI states corresponding to the SRS Resource Set 1 can be determined based on the unified TCI states corresponding to the CORESET with the minimum identifier. When the CORESET with the minimum identifier only corresponds to one set of unified TCI states, this one set of unified TCI states can be directly determined as the unified TCI states corresponding to the SRS Resource Set 1. When the CORESET with the minimum identifier corresponds to multiple sets of unified TCI states, a first set of unified TCI states from the multiple sets of unified TCI states can be determined as the unified TCI states corresponding to the SRS Resource Set 1. The CORESET with the minimum identifier can be the CORESET with the minimum identifier from the CORESETs included in a slot during which a search space is most recently detected. The CORESET with the minimum identifier can also be the CORESET with the minimum identifier in an active Band Width Part (active BWP). The CORESET with the minimum identifier can also be the CORESET with the minimum identifier corresponding to the terminal.

In some embodiments of the present disclosure, when the number of resource sets is less than the number of determined sets of unified TCI states, the unified TCI states corresponding to each SRS resource set in the SRS resources can also be determined by determining, in response to a number of SRS resource sets being K, K set(s) of unified TCI states from unified TCI states corresponding to the Physical Downlink Shared Channel (PDSCH), as unified TCI states corresponding to K SRS resource set(s).

For example, if the SRS resource includes one SRS resource set, namely SRS Resource Set 1, then the unified TCI states corresponding to the PDSCH of the terminal can be determined, and the unified TCI states corresponding to the SRS Resource Set 1 can be determined based on the unified TCI states corresponding to the PDSCH. When the PDSCH only corresponds to one set of unified TCI states, this one set of unified TCI states can be directly determined as the unified TCI states corresponding to the SRS Resource Set 1. When the PDSCH corresponds to multiple sets of unified TCI states, a first set of unified TCI states from the multiple sets of unified TCI states can be determined as the unified TCI states corresponding to the SRS Resource Set 1. The unified TCI states corresponding to the PDSCH can be one or more sets of unified TCI states determined from the N sets of unified TCI states based on an indication field in DCI signaling. Alternatively, the unified TCI states corresponding to the PDSCH can also be one or more sets of unified TCI states determined from the N sets of unified TCI states based on a default rule. The indication field in DCI signaling is configured to indicate which one or more sets of unified TCI states from the N sets of unified TCI states are used for PDSCH transmission.

In some embodiments of the present disclosure, the first indication information can be included in the Media Access Control Control Element (MAC CE), or the first indication information can be included in the Downlink Control Information (DCI) and the Media Access Control Control Element (MAC CE).

When the first indication information is included in the Downlink Control Information (DCI) and the Media Access Control Control Element (MAC CE), the MAC CE is used to activate multiple code points in the TCI state field of DCI, which correspond to K set(s) of unified TCI states one-by-one, and the TCI state field of DCI is configured to indicate one code point in the multiple code points. In some embodiments, at least one code point in the multiple code points in the TCI state field of DCI activated by the MAC CE corresponds to multiple sets of unified TCI states. That is, there is at least one code point which corresponds to K sets of unified TCI states, where K is a positive integer greater than 1.

When the first indication information is included in the Media Access Control Control Element (MAC CE), the MAC CE is used to activate K set(s) of unified TCI states, which correspond to a first code point in the TCI state field of DCI. That is, the MAC CE only activates one code point, i.e. the first code point, in the TCI state field of DCI. Therefore, N sets of unified TCI states can be determined based on the K set(s) of unified TCI states corresponding to the first code point.

It can be understood that technical implementations involved in the process of determining, by the network device, the transmission configuration indication state in some embodiments of the present disclosure can be applied to the process of determining, by the terminal, the transmission configuration indication state in some embodiments of the present disclosure. Therefore, for some technical implementation descriptions of the process of determining, by the network device, the transmission configuration indication state that are not detailed enough, reference can be made to the relevant descriptions in the implementation process of determining, by the terminal, the transmission configuration indication state, which will not be repeated here.

It can be understood that the method for determining the transmission configuration indication state provided in embodiments of the present disclosure is applicable to the process of determining the transmission configuration indication state during the interaction between the terminal and the network device. In some embodiments, the process of determining the transmission configuration indication state through the interaction between the terminal and the network device will not be described in detail in embodiments of the present disclosure.

It should be noted that those skilled in the art can understand that the various implementation methods/embodiments involved in the embodiments of the present disclosure can be used in conjunction with the aforementioned embodiments or can be used independently. Whether used alone or in conjunction with the aforementioned embodiments, the implementation principles are similar. In the implementation of the present disclosure, some embodiments are described in terms of the implementations used together. Alternatively, those skilled in the art can understand that such examples are not limitations to the embodiments of the present disclosure.

Based on the same concept, embodiments of the present disclosure further provide an apparatus for determining a transmission configuration indication state.

It can be understood that in order to implement the above-mentioned functions, the apparatus for determining a transmission configuration indication state provided in embodiments of the present disclosure include corresponding hardware structures and/or software modules for executing respective functions. In combination with units and algorithm steps of various examples disclosed in the present disclosure, embodiments of the present disclosure can be implemented in a form of hardware or a combination of the hardware and computer software. Whether a certain function is implemented in the hardware or by the hardware driven through the computer software depends on a particular application and design constraints of the technical solution. Those skilled in the art can implement the described functions with different methods for each particular application, but such an implementation shall not be regarded as going beyond the scope of the technical solution according to embodiments of the present disclosure.

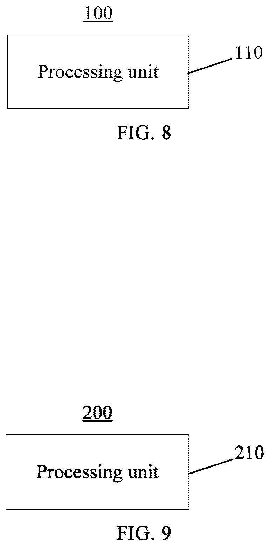

FIG. 8 is a block diagram of an apparatus for determining a transmission configuration indication state according one or more embodiments. As shown in FIG. 8, the apparatus 100 includes a processing unit 110.

The processing unit 110 is configured to determine N sets of unified TCI states, and determine, based on the N sets of unified TCI states, a unified TCI state corresponding to an SRS resource.

In the present disclosure, N is a positive integer greater than 1.

In some embodiments of the present disclosure, determining the N sets of unified TCI states includes: receiving first indication information, where the first indication information is configured to indicate M set(s) of unified TCI states, where M is a positive integer, and determining, based on the first indication information, the N sets of unified TCI states.

In some embodiments of the present disclosure, the first indication information received includes information received for L times, and information received at an i^{th} time is configured to indicate Mᵢ set(s) of unified TCI states, where L is a positive integer, and i is a positive integer less than or equal to L. The N sets of unified TCI states are determined based on the Mᵢ set(s) of unified TCI states; or the N sets of unified TCI states are determined based on the Mᵢ set(s) of unified TCI states and Mⱼ set(s) of unified TCI states, where j is a positive integer less than or equal to L, and i is not equal to j.

In some embodiments of the present disclosure, the N sets of unified TCI states are determined based on the Mᵢ set(s) of unified TCI states, and the Mᵢ set(s) of unified TCI states is/are determined based on information received at an L^{th} time, where i is equal to L, and the information received at the L^{th} time is latest received information.

In some embodiments of the present disclosure, the N sets of unified TCI states are determined based on the Mᵢ set(s) of unified TCI states and the Mⱼ set(s) of unified TCI states, the Mᵢ set(s) of unified TCI states is/are determined based on information received at an L^{th} time, and the Mⱼ set(s) of unified TCI states is/are determined based on information received at a j^{th} time, where i is equal to L, j is less than i, and the information received at the L^{th} time does not update at least one set of unified TCI states from the Mⱼ set(s) of unified TCI states.

In some embodiments of the present disclosure, determining, based on the first indication information, the N sets of unified TCI states, includes: receiving second indication information, where the second indication information is configured to activate multiple code points corresponding to a TCI state field of the first indication information, and each code point in the multiple code points corresponds to M set(s) of unified TCI states; and in response to the second indication information being received before the first indication information, determining the N sets of unified TCI states based on M set(s) of unified TCI states corresponding to a default code point in the multiple code points.

In some embodiments of the present disclosure, the SRS resource includes at least one of the following: an SRS resource used for codebook transmission, an SRS resource used for non-codebook transmission, an SRS resource for antenna switching, or an SRS resource used for beam management.

In some embodiments of the present disclosure, determining, based on the N sets of unified TCI states, the unified TCI state corresponding to the SRS resource, includes: determining, based on third indication information, the unified TCI state corresponding to the SRS resource, where the third indication information is used for configuring whether the SRS resource follows the unified TCI state, and/or configuring the SRS resource to follow one or more sets of unified TCI states from the N sets of unified TCI states.

In some embodiments of the present disclosure, determining the unified TCI state corresponding to the SRS resource includes at least one of the following: based on fourth indication information, determining one set of unified TCI states from the N sets of unified TCI states or determining the N sets of unified TCI states, as the unified TCI state corresponding to the SRS resource; or based on a default rule, determining one set of unified TCI states from the N sets of unified TCI states or determining the N sets of unified TCI states, as the unified TCI state corresponding to the SRS resource.

In some embodiments of the present disclosure, in response to a number of SRS resource sets being N, based on the default rule, determining one set of unified TCI states from the N sets of unified TCI states or determining the N sets of unified TCI states, as the unified TCI state corresponding to the SRS resource, includes: based on a default association relationship, determining unified TCI states which have the default association relationship with the SRS resource sets from the N sets of unified TCI states, as unified TCI states corresponding to SRS resources included in the SRS resource sets.

In some embodiments of the present disclosure, in response to a number of SRS resource sets being K, where K is a positive integer less than N, based on the default rule, determining one set of unified TCI states from the N sets of unified TCI states or determining the N sets of unified TCI states, as the unified TCI state corresponding to the SRS resource, includes: determining default K set(s) of unified TCI states from the N sets of unified TCI states as unified TCI states corresponding to the K SRS resource set(s); or determining K set(s) of unified TCI states from unified TCI states corresponding to a Control Resource Set (CORESET) as unified TCI states corresponding to the K SRS resource set(s); or determining K set(s) of unified TCI states from unified TCI states corresponding to a Physical Downlink Shared Channel (PDSCH) as unified TCI states corresponding to the K SRS resource set(s).

In some embodiments of the present disclosure, the first indication information is included in a Media Access Control Control Element (MAC CE) and/or in Downlink Control Information (DCI).

In some embodiments of the present disclosure, the first indication information is included in the MAC CE, the MAC CE is configured to activate M set(s) of unified TCI states, and the M set(s) of unified TCI states corresponds to a first code point in a TCI state field of the DCI.

In some embodiments of the present disclosure, the first indication information is included in the MAC CE and the DCI, where the MAC CE is configured to activate multiple code points in the TCI state field of the DCI, each code point in the multiple code points corresponds to M set(s) of unified TCI states, and the TCI state field of the DCI is configured to indicate one code point in the multiple code points.

In some embodiments of the present disclosure, the third indication information is included in Radio Resource Control (RRC) signaling and/or in an MAC CE.

According to the method provided by embodiments of the present disclosure, the N sets of unified TCI states can be determined, and the unified TCI state corresponding to the SRS resource can be determined based on the N sets of unified TCI states, so that a method for determining the unified TCI state corresponding to the SRS resource is provided, thereby improving the transmission flexibility of the SRS resource that is based on the unified TCI state.

FIG. 9 is a block diagram of an apparatus for determining a transmission configuration indication state according one or more embodiments. As shown in FIG. 9, the apparatus 200 includes a processing unit 210.

The processing unit 210 is configured to configure N sets of unified TCI states.

In the present disclosure, the N sets of unified TCI states are configured to determine a unified TCI state corresponding to an SRS resource, where N is a positive integer greater than 1.

In some embodiments of the present disclosure, configuring the N sets of unified TCI states, includes: sending first indication information, where the first indication information is configured to indicate M set(s) of unified TCI states, where M is a positive integer.

In some embodiments of the present disclosure, the first indication information sent includes information sent for L times, and information sent at an i^{th} time is configured to indicate Mᵢ set(s) of unified TCI states, where L is a positive integer, and i is a positive integer less than or equal to L. The N sets of unified TCI states are determined based on the Mᵢ set(s) of unified TCI states, or the N sets of unified TCI states are determined based on the Mᵢ set(s) of unified TCI states and Mⱼ set(s) of unified TCI states, where j is a positive integer less than or equal to L, and i is not equal to j.

In some embodiments of the present disclosure, the N sets of unified TCI states are determined based on the Mᵢ set(s) of unified TCI states, and the Mᵢ set(s) of unified TCI states is/are determined based on information sent at an L^{th} time, where i is equal to L, and the information sent at the L^{th} time is latest sent information.

In some embodiments of the present disclosure, the N sets of unified TCI states are determined based on the Mᵢ set(s) of unified TCI states and the Mⱼ set(s) of unified TCI states, the Mᵢ set(s) of unified TCI states is/are determined based on information sent at an L^{th} time, and the Mⱼ set(s) of unified TCI states is/are determined based on information sent at a j^{th} time, where i is equal to L, j is less than i, and the information sent at the L^{th} time does not update at least one set of unified TCI states from the Mⱼ set(s) of unified TCI states.

In some embodiments of the present disclosure, the method further includes: sending second indication information, where the second indication information is configured to activate multiple code points corresponding to a TCI state field of the first indication information, and each code point in the multiple code points corresponds to M set(s) of unified TCI states. The N sets of unified TCI states are determined based on M set(s) of unified TCI states corresponding to a default code point in the multiple code points.

In some embodiments of the present disclosure, the SRS resource includes at least one of the following: an SRS resource used for codebook transmission, an SRS resource used for non-codebook transmission, an SRS resource for antenna switching, or an SRS resource used for beam management.

In some embodiments of the present disclosure, the unified TCI state corresponding to the SRS resource is determined based on the N sets of unified TCI states by: sending third indication information, where the third indication information is used for configuring whether the SRS resource follows the unified TCI state, and/or configuring the SRS resource to follow one or more sets of unified TCI states from the N sets of unified TCI states.

In some embodiments of the present disclosure, when there is a value of M corresponding to information sent at least one time being greater than 1, determining the unified TCI states corresponding to the SRS resource set includes at least one of the following: based on indication of fourth indication information, determining one set of unified TCI states from the N sets of unified TCI states or determining the N sets of unified TCI states, as the unified TCI state corresponding to the SRS resource; or based on a default rule, determining one set of unified TCI states from the N sets of unified TCI states or determining the N sets of unified TCI states, as the unified TCI states corresponding to the SRS resource set.

In some embodiments of the present disclosure, in response to a number of SRS resource sets being N, based on the default rule, determining one set of unified TCI states from the N sets of unified TCI states or determining the N sets of unified TCI states, as the unified TCI state corresponding to the SRS resource, includes: based on a default association relationship, determining unified TCI states which have the default association relationship with the SRS resource sets from the N sets of unified TCI states, as unified TCI states corresponding to SRS resources included in the SRS resource sets.

In some embodiments of the present disclosure, in response to a number of SRS resource sets being K, where K is a positive integer less than N, based on the default rule, determining one set of unified TCI states from the N sets of unified TCI states or determining the N sets of unified TCI states, as the unified TCI state corresponding to the SRS resource, includes: determining default K set(s) of unified TCI states from the N sets of unified TCI states as unified TCI states corresponding to the K SRS resource set(s); or determining K set(s) of unified TCI states from unified TCI states corresponding to a Control Resource Set (CORESET) as unified TCI states corresponding to the K SRS resource set(s); or determining K set(s) of unified TCI states from unified TCI states corresponding to a Physical Downlink Shared Channel (PDSCH) as unified TCI states corresponding to the K SRS resource set(s).

In some embodiments of the present disclosure, the first indication information is included in a Media Access Control Control Element (MAC CE) and/or in Downlink Control Information (DCI).

In some embodiments of the present disclosure, the first indication information is included in the MAC CE, the MAC CE is configured to activate M set(s) of unified TCI states, and the M set(s) of unified TCI states corresponds to a first code point in a TCI state field of the DCI.

In some embodiments of the present disclosure, the first indication information is included in the MAC CE and the DCI, where the MAC CE is configured to activate multiple code points in the TCI state field of the DCI, each code point in the multiple code points corresponds to M set(s) of unified TCI states, and the TCI state field of the DCI is configured to indicate one code point in the multiple code points.

In some embodiments of the present disclosure, the third indication information is included in Radio Resource Control (RRC) signaling and/or in an MAC CE.

According to the method provided by embodiments of the present disclosure, the N sets of unified TCI states can be determined, and the unified TCI state corresponding to the SRS resource can be determined based on the N sets of unified TCI states, so that a method for determining the unified TCI state corresponding to the SRS resource is provided, thereby improving the transmission flexibility of the SRS resource that is based on the unified TCI state.

Regarding the apparatus in the above embodiments, a specific manner in which each module performs operations has been described in detail in the method embodiments, which will not be elaborated here.

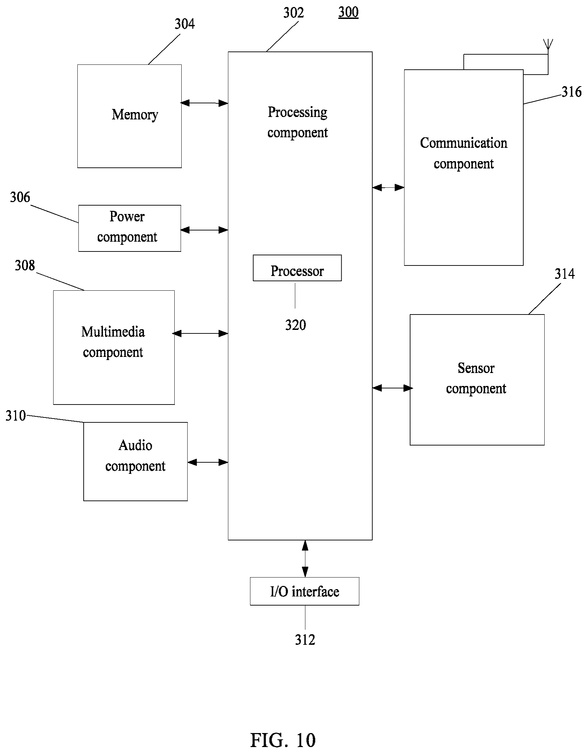

FIG. 10 is a block diagram of a device 300 for determining a transmission configuration indication state according to one or more embodiments. For example, the device 300 may be any terminal such as a mobile phone, a computer, a digital broadcast terminal, a messaging device, a gaming console, a tablet device, a medical device, an exercise device, a personal digital assistant, etc.

Referring to FIG. 10, the device 300 may include one or more of the following components: a processing component 302, a memory 304, a power component 306, a multimedia component 308, an audio component 310, an input/output (I/O) interface 312, a sensor component 314, and a communication component 316.

The processing component 302 typically controls overall operations of the device 300, such as the operations associated with display, telephone calls, data communications, camera operations, and recording operations. The processing component 302 may include one or more processors 320 to execute instructions to complete all or part of the steps in the above described methods. Moreover, the processing component 302 may include one or more modules which facilitate the interaction between the processing component 302 and other components. For example, the processing component 302 may include a multimedia module to facilitate the interaction between the multimedia component 308 and the processing component 302.

The memory 304 is configured to store various types of data to support the operation of the device 300. Examples of such data include instructions for any applications or methods operated on the device 300, contact data, phonebook data, messages, pictures, video, etc. The memory 304 may be implemented using any type of volatile or non-volatile memory apparatuses, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 306 provides power to various components of the device 300. The power component 306 may include a power management system, one or more power sources, and any other components associated with the generation, management, and distribution of power in the device 300.

The multimedia component 308 includes a screen providing an output interface between the device 300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 308 includes a front camera and/or a rear camera. The front camera and the rear camera may receive an external multimedia datum while the device 300 is in an operation mode, such as a photographing mode or a video mode. Each of the front camera and the rear camera may be a fixed optical lens system or have focus and optical zoom capability.

The audio component 310 is configured to output and/or input audio signals. For example, the audio component 310 includes a microphone (MIC) configured to receive an external audio signal when the device 300 is in an operation mode, such as a call mode, a recording mode, and a voice recognition mode. The received audio signal may be further stored in the memory 304 or transmitted via the communication component 316. In some embodiments, the audio component 310 further includes a speaker to output audio signals.

The I/O interface 312 provides an interface between the processing component 302 and peripheral interface modules, such as a keyboard, a click wheel, buttons, and the like. The buttons may include, but are not limited to, a home button, a volume button, a starting button, and a locking button.

The sensor component 314 includes one or more sensors to provide state assessments of various aspects of the device 300. For example, the sensor component 314 may detect an open/closed state of the device 300, relative positioning of components, e.g., the display and the keypad, of the device 300, a change in position of the device 300 or a component of the device 300, a presence or absence of user contact with the device 300, an orientation or an acceleration/deceleration of the device 300, and a change in temperature of the device 300. The sensor component 314 may include a proximity sensor configured to detect the presence of nearby objects without any physical contact. The sensor component 314 may further include a light sensor, such as a CMOS or CCD image sensor, for use in imaging applications. In some embodiments, the sensor component 314 may further include an accelerometer sensor, a gyroscope sensor, a magnetic sensor, a pressure sensor, or a temperature sensor.

The communication component 316 is configured to facilitate communication, wired or wirelessly, between the device 300 and other devices. The device 300 may access a wireless network based on a communication standard, such as Wi-Fi, 2G or 3G, or a combination thereof. In an embodiment, the communication component 316 receives a broadcast signal or broadcast associated information from an external broadcast management system via a broadcast channel. In an embodiment, the communication component 316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an embodiment of the present disclosure, the device 300 may be implemented with one or more application specific integrated circuits (ASICs), digital signal processors (DSPs), digital signal processing devices (DSPDs), programmable logic devices (PLDs), field programmable gate arrays (FPGAs), controller, micro-controller, microprocessors, or other electronic components, for performing the above described methods.

In an embodiment of the present disclosure, there is further provided a non-transitory computer readable storage medium including instructions, such as the memory 304 including instructions, the above instructions may be executed by the processor 320 in the device 300 for completing the above-described methods. For example, the non-transitory computer-readable storage medium may be a ROM, a Random Access Memory (RAM), a CD-ROM, a magnetic tape, a floppy disc, an optical data storage device, and the like.

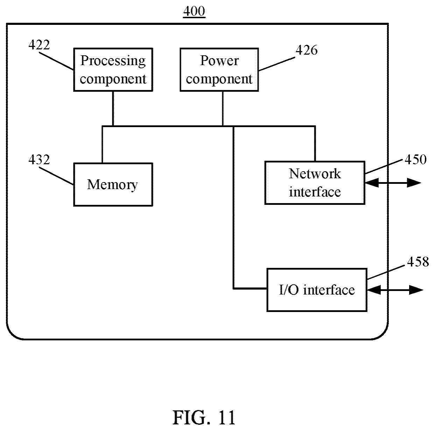

FIG. 11 is a schematic diagram of a device 400 for determining a transmission configuration indication state according to one or more embodiments. For example, the device 400 may be provided as a server. Referring to FIG. 11, the device 400 includes a processing component 422, which further includes one or more processors and a memory resource represented by a memory 432 for storing instructions executable by the processing component 422, such as an application program. The application program stored in the memory 432 may include one or more modules, each corresponding to a set of instructions. In addition, the processing component 422 is configured to execute the instructions to execute the aforementioned method.

The device 400 may further include: a power component 426 configured to perform power management of the device 400, a wired or wireless network interface 450 configured to connect the device 400 to the network, and an input/output (I/O) interface 458. The device 400 may operate an operating system stored in the memory 432, such as Windows Server TM, Mac OS XTM, UnixTM, LinuxTM, FreeBSDTM, or the like.

It can be further understood that in the present disclosure, "a plurality" refers to two or more, and other quantifiers are analogous to it. "and/or" is used to describe an associated relationship between associated objects and means three relationships, for instance, A and/or B may mean A alone, A and B together, and B alone. The character "/" generally indicates that the associated objects are in an "or" relationship. Singular forms "a", "an" and "the" are intended to include plural forms as well, unless the context clearly indicates otherwise.

It can be further understood the meanings of the words "in response to" and "if" involved in the present disclosure depend on the context and the actual usage scene. For example, the word "in response to" as used herein can be interpreted as "upon", "when" or "if".

It can be further understood that the terms "first", "second", etc. are used to describe various information, but the information should not be limited by these terms. These terms are merely used to distinguish the same type of information from each other and do not denote a particular order or degree of importance. Indeed, the expressions "first", "second", etc. may be used interchangeably. For instance, first information may also be referred to as second information, and similarly, second information may also be referred to as first information, without departing from the scope of the present disclosure.

It can be further understood that although the operations in embodiments of the present disclosure are described in a specific order in the drawings, they should not be understood as requiring that the operations are performed in the specific order shown or in a serial order, or that all the operations shown are performed to get the desired result. In certain environments, multitasking and parallel processing may be advantageous.

After considering the specification and practices of the invention disclosed herein, those skilled in the art will easily come up with other implementation solutions of the present disclosure. The present disclosure aims to cover any variations, uses, or adaptive changes of the present disclosure, which follow the general principles of the present disclosure and include common knowledge or conventional technical means in the art that are not disclosed in the present disclosure.

It will be appreciated that the present disclosure is not limited to the exact construction that has been described above and illustrated in the drawings, and that various modifications and changes may be made without departing from the scope thereof. It is intended that the scope of the present disclosure only be limited by the appended claims.

## Claims

1. A method for determining a transmission configuration indication state, performed by a terminal, comprising:
determining N sets of unified transmission configuration indication (TCI) states, where N is a positive integer greater than 1; and
determining, based on the N sets of unified TCI states, a unified TCI state corresponding to a sounding reference signal (SRS) resource.

2. The method according to claim 1, wherein determining the N sets of unified TCI states, comprises:
receiving first indication information, wherein the first indication information is configured to indicate M set(s) of unified TCI states, where M is a positive integer; and
determining, based on the first indication information, the N sets of unified TCI states.

3. The method according to claim 2, wherein the first indication information received comprises information received for L times, and information received at an i^{th} time is configured to indicate Mᵢ set(s) of unified TCI states, where L is a positive integer, and i is a positive integer less than or equal to L; and wherein
the N sets of unified TCI states are determined based on the Mᵢ set(s) of unified TCI states; or
the N sets of unified TCI states are determined based on the Mᵢ set(s) of unified TCI states and Mⱼ set(s) of unified TCI states, where j is a positive integer less than or equal to L, and i is not equal to j.

4. The method according to claim 3, wherein the N sets of unified TCI states are determined based on the Mᵢ set(s) of unified TCI states, and the Mᵢ set(s) of unified TCI states is/are determined based on information received at an L^{th} time, wherein i is equal to L, and the information received at the L^{th} time is latest received information.

5. The method according to claim 3, wherein the N sets of unified TCI states are determined based on the Mᵢ set(s) of unified TCI states and the Mⱼ set(s) of unified TCI states, the Mᵢ set(s) of unified TCI states is/are determined based on information received at an L^{th} time, and the Mⱼ set(s) of unified TCI states is/are determined based on information received at a j^{th} time, wherein i is equal to L, j is less than i, and the information received at the L^{th} time does not update at least one set of unified TCI states from the Mⱼ set(s) of unified TCI states.

6. The method according to claim 2, wherein determining, based on the first indication information, the N sets of unified TCI states, comprises:
receiving second indication information, wherein the second indication information is configured to activate multiple code points corresponding to a TCI state field of the first indication information, and each code point in the multiple code points corresponds to M set(s) of unified TCI states; and
in response to the second indication information being received before the first indication information, determining the N sets of unified TCI states based on M set(s) of unified TCI states corresponding to a default code point in the multiple code points.

7. The method according to claim 1, wherein the SRS resource comprises at least one of:
an SRS resource used for codebook transmission;
an SRS resource used for non-codebook transmission;
an SRS resource for antenna switching; or
an SRS resource used for beam management.

8. The method according to any of claims 1 to 3, wherein determining, based on the N sets of unified TCI states, the unified TCI state corresponding to the SRS resource, comprises:
determining, based on third indication information, the unified TCI state corresponding to the SRS resource, wherein the third indication information is used for configuring whether the SRS resource follows the unified TCI state; and/or
configuring the SRS resource to follow one or more sets of unified TCI states from the N sets of unified TCI states.

9. The method according to claim 1, wherein determining the unified TCI state corresponding to the SRS resource comprises at least one of:
based on fourth indication information, determining one set of unified TCI states from the N sets of unified TCI states or determining the N sets of unified TCI states, as the unified TCI state corresponding to the SRS resource; or
based on a default rule, determining one set of unified TCI states from the N sets of unified TCI states or determining the N sets of unified TCI states, as the unified TCI state corresponding to the SRS resource.

10. The method according to claim 9, wherein a number of SRS resource sets is N, and based on the default rule, determining one set of unified TCI states from the N sets of unified TCI states or determining the N sets of unified TCI states, as the unified TCI state corresponding to the SRS resource, comprises:
based on a default association relationship, determining unified TCI states which have the default association relationship with the SRS resource sets from the N sets of unified TCI states, as unified TCI states corresponding to SRS resources comprised in the SRS resource sets.

11. The method according to claim 9, wherein a number of SRS resource sets is K, where K is a positive integer less than N, and based on the default rule, determining one set of unified TCI states from the N sets of unified TCI states or determining the N sets of unified TCI states, as the unified TCI state corresponding to the SRS resource, comprises:
determining default K set(s) of unified TCI states from the N sets of unified TCI states as unified TCI states corresponding to the K SRS resource set(s); or
determining K set(s) of unified TCI states from unified TCI states corresponding to a Control Resource Set (CORESET) as unified TCI states corresponding to the K SRS resource set(s); or
determining K set(s) of unified TCI states from unified TCI states corresponding to a Physical Downlink Shared Channel (PDSCH) as unified TCI states corresponding to the K SRS resource set(s).

12. The method according to claim 2, wherein the first indication information is comprised in a Media Access Control Control Element (MAC CE) and/or in Downlink Control Information (DCI).

13. The method according to claim 12, wherein the first indication information is comprised in the MAC CE, the MAC CE is configured to activate M set(s) of unified TCI states, and the M set(s) of unified TCI states corresponds to a first code point in a TCI state field of the DCI.

14. The method according to claim 12, wherein the first indication information is comprised in the MAC CE and the DCI, wherein the MAC CE is configured to activate multiple code points in the TCI state field of the DCI, each code point in the multiple code points corresponds to M set(s) of unified TCI states, and the TCI state field of the DCI is configured to indicate one code point in the multiple code points.

15. The method according to claim 8, wherein the third indication information is comprised in Radio Resource Control (RRC) signaling and/or in an MAC CE.

16. A method for determining a transmission configuration indication state, performed by a network device, comprising:
configuring N sets of unified transmission configuration indication (TCI) states, where N is a positive integer greater than 1, and the N sets of unified TCI states are configured to determine a unified TCI state corresponding to a sounding reference signal (SRS) resource.

17. The method according to claim 16, wherein configuring the N sets of unified TCI states, comprises:
sending first indication information, wherein the first indication information is configured to indicate M set(s) of unified TCI states, where M is a positive integer.

18. The method according to claim 17, wherein the first indication information sent comprises information sent for L times, and information sent at an i^{th} time is configured to indicate Mᵢ set(s) of unified TCI states, where L is a positive integer, and i is a positive integer less than or equal to L; and wherein
the N sets of unified TCI states are determined based on the Mᵢ set(s) of unified TCI states; or
the N sets of unified TCI states are determined based on the Mᵢ set(s) of unified TCI states and Mⱼ set(s) of unified TCI states, where j is a positive integer less than or equal to L, and i is not equal to j.

19. The method according to claim 18, wherein the N sets of unified TCI states are determined based on the Mᵢ set(s) of unified TCI states, and the Mᵢ set(s) of unified TCI states is/are determined based on information sent at an L^{th} time, wherein i is equal to L, and the information sent at the L^{th} time is latest sent information.

20. The method according to claim 18, wherein the N sets of unified TCI states are determined based on the Mᵢ set(s) of unified TCI states and the Mⱼ set(s) of unified TCI states, the Mⱼ set(s) of unified TCI states is/are determined based on information sent at an L^{th} time, and the Mⱼ set(s) of unified TCI states is/are determined based on information sent at a j^{th} time, wherein i is equal to L, j is less than i, and the information sent at the L^{th} time does not update at least one set of unified TCI states from the Mⱼ set(s) of unified TCI states.

21. The method according to claim 17, further comprising:
sending second indication information, wherein the second indication information is configured to activate multiple code points corresponding to a TCI state field of the first indication information, and each code point in the multiple code points corresponds to M set(s) of unified TCI states;
wherein the N sets of unified TCI states are determined based on M set(s) of unified TCI states corresponding to a default code point in the multiple code points.

22. The method according to claim 16, wherein the SRS resource comprises at least one of:
an SRS resource used for codebook transmission;
an SRS resource used for non-codebook transmission;
an SRS resource for antenna switching; or
an SRS resource used for beam management.

23. The method according to any of claims 16 to 18, wherein the unified TCI state corresponding to the SRS resource is determined based on the N sets of unified TCI states by:
sending third indication information, wherein the third indication information is used for configuring whether the SRS resource follows the unified TCI state; and/or
configuring the SRS resource to follow one or more sets of unified TCI states from the N sets of unified TCI states.

24. The method according to claim 17, wherein determining the unified TCI state corresponding to the SRS resource comprises at least one of:
sending fourth indication information, wherein the fourth indication information is configured to indicate to determine one set of unified TCI states from the N sets of unified TCI states or determine the N sets of unified TCI states, as the unified TCI state corresponding to the SRS resource;
based on a default rule, determining one set of unified TCI states from the N sets of unified TCI states or determining the N sets of unified TCI states, as the unified TCI state corresponding to the SRS resource.

25. The method according to claim 24, wherein a number of SRS resource sets is N, and based on the default rule, determining one set of unified TCI states from the N sets of unified TCI states or determining the N sets of unified TCI states, as the unified TCI state corresponding to the SRS resource, comprises:
based on a default association relationship, determining unified TCI states which have the default association relationship with the SRS resource sets from the N sets of unified TCI states, as unified TCI states corresponding to SRS resources comprised in the SRS resource sets.

26. The method according to claim 24, wherein a number of SRS resource sets is K, where K is a positive integer less than N, and based on the default rule, determining one set of unified TCI states from the N sets of unified TCI states or determining the N sets of unified TCI states, as the unified TCI state corresponding to the SRS resource, comprises:
determining default K set(s) of unified TCI states from the N sets of unified TCI states as unified TCI states corresponding to the K SRS resource set(s); or
determining K set(s) of unified TCI states from unified TCI states corresponding to a Control Resource Set (CORESET) as unified TCI states corresponding to the K SRS resource set(s); or
determining K set(s) of unified TCI states from unified TCI states corresponding to a Physical Downlink Shared Channel (PDSCH) as unified TCI states corresponding to the K SRS resource set(s).

27. The method according to claim 17, wherein the first indication information is comprised in a Media Access Control Control Element (MAC CE) and/or in Downlink Control Information (DCI).

28. The method according to claim 27, wherein the first indication information is comprised in the MAC CE, the MAC CE is configured to activate M set(s) of unified TCI states, and the M set(s) of unified TCI states corresponds to a first code point in a TCI state field of the DCI.

29. The method according to claim 27, wherein the first indication information is comprised in the MAC CE and the DCI, wherein the MAC CE is configured to activate multiple code points in the TCI state field of the DCI, each code point in the multiple code points corresponds to M set(s) of unified TCI states, and the TCI state field of the DCI is configured to indicate one code point in the multiple code points.

30. The method according to claim 23, wherein the third indication information is comprised in Radio Resource Control (RRC) signaling and/or in an MAC CE.

31. An apparatus for determining a transmission configuration indication state, comprising:
a processing unit configured to determine N sets of unified transmission configuration indication (TCI) states, where N is a positive integer greater than 1, and determine, based on the N sets of unified TCI states, a unified TCI state corresponding to a sounding reference signal (SRS) resource.

32. An apparatus for determining a transmission configuration indication state, comprising:
a processing unit configured to configure N sets of unified transmission configuration indication (TCI) states, where N is a positive integer greater than 1, and the N sets of unified TCI states are configured to determine a unified TCI state corresponding to a sounding reference signal (SRS) resource.

33. A device for determining a transmission configuration indication state, comprising:
a processor; and
a memory configured to store executable instructions for the processor;
wherein the processor is configured to perform the method according to any of claims 1 to 15.

34. A device for determining a transmission configuration indication state, comprising:
a processor; and
a memory configured to store executable instructions for the processor;
wherein the processor is configured to perform the method according to any of claims 16 to 30.

35. A storage medium having instructions stored thereon, which when executed by a processor of a terminal, the terminal is caused to perform the method according to any of claims 1 to 15.

36. A storage medium having instructions stored thereon, which when executed by a processor of a network device, the network device is caused to perform the method according to any of claims 16 to 30.
